Europäisches Patentamt

European Patent Office

Office européen des brevets

(19)

(11) Publication number: **0 371 605**
**A2**

# EUROPEAN PATENT APPLICATION

(21) Application number: **89310911.6**

(22) Date of filing: **23.10.89**

(51) Int. Cl.5: **H04L 12/54**

(30) Priority: **29.11.88 US 277600**

(43) Date of publication of application:
**06.06.90 Bulletin 90/23**

(84) Designated Contracting States:
**DE FR GB IT**

(71) Applicant: **International Business Machines
Corporation
Old Orchard Road
Armonk, N.Y. 10504(US)**

(72) Inventor: **Heyen, John Gary
1747 Conrad Circle
Carrollton Texas 75007(US)**
Inventor: **Kasiraj, Chander
2133 North Aspenwood
Grapevine Texas 76051(US)**
Inventor: **Wolf, Timothy James
2621 Cummings Drive
Bedford Texas 76021(US)**

(74) Representative: **Grant, Iain Murray
IBM United Kingdom Limited Intellectual
Property Department Hursley Park
Winchester Hampshire SO21 2JN(GB)**

(54) Electronic mail systems.

(57) A method is disclosed for confirming selected activities of multiple electronic mail recipients. An indication of each item of electronic mail designated by a sender as requiring confirmation of the recipient's activities is stored within a confirmation log. The activities of each recipient are then monitored and a confirmation message is generated automatically in response to a determination that confirmation is required for a selected activity or recipient. Each confirmation message is then correlated with the stored indications of electronic mail objects within the confirmation log. Thereafter, the sender may display the contents of the confirmation log selectively by mail object or recipient to determine the status of multiple selected electronic mail objects. A notification of the receipt of a confirmation message may also be transmitted to the sender.

Fig. 1

## ELECTRONIC MAIL SYSTEMS

This invention relates in general to improvements in electronic mail systems and in particular to methods whereby a sender of electronic mail may receive confirmation of the activities of multiple recipients of electronic mail and seeks to provide methods, based on which, a sender of multiple items of electronic mail may correlate and display confirmation of the activities of a plurality of electronic mail recipients.

Electronic mail or "E-Mail" systems are well known in the prior art. By "electronic mail" what is meant is a system whereby messages may be sent and/or received between two computers or work stations. For example, two computers coupled together by a Local Area Network (LAN) may be used to communicate detailed messages between the operators thereof. Similarly, two interactive work stations coupled to a central processor may also be used to transmit or receive electronic mail messages by using well known communication techniques.

While known electronic mail systems do provide an enhanced method of communication which may be used in situations where all parties in the communication loop are not on-line at all times, there are certain disadvantages inherent in such systems. For example, it is often desirable for the sender of an item of electronic mail to determine with a high degree of certainty whether or not the item has been electronically transmitted to the correct location.

This particular problem has been addressed in selected electronic mail systems which provide a confirmation notification when a distribution is "delivered" or placed in a recipient's "in-basket." While this technique represents an improvement over previously known electronic mail systems, it is often desirable to provide the sender with a higher level of information regarding the activities of an electronic mail recipient. Therefore, it should be obvious that a need exists for an electronic mail system which will satisfy this requirement.

Additionally, while it is possible to send multiple electronic mail objects to a plurality of recipients, it should be apparent that multiple confirmation messages might easily overwhelm a sender with such information. Therefore, it should be obvious that a need exists for a method whereby a sender may correlate and organise multiple confirmation messages from a plurality of electronic mail recipients.

It is therefore one object of the present invention to provide an improved electronic mail system.

The present invention provides a method for providing confirmation to a sender of the activities of a plurality of recipients of multiple electronic mail objects, the method comprising the steps of: designating a plurality of electronic mail objects for which confirmation of selected activities of the recipients thereof is desired; creating a confirmation log containing a stored indication of each of the designated electronic mail objects; transmitting the plurality of electronic mail objects; monitoring the activities of each recipient of the plurality of electronic mail objects; and automatically transmitting a confirmation message to the confirmation log in response to a selected activity by a recipient of a designated electronic mail object.

One version of such an arrangement disclosed hereinafter provides an improved electronic mail system wherein a sender may receive confirmation of activities by multiple recipients of electronic mail. and may also display confirmation of activities by multiple recipients of electronic mail, organised by individual mail object or recipient.

As disclosed, an indication of each item of electronic mail which is designated by a sender as requiring confirmation of the recipient's activities is stored within a confirmation log. The activities of each recipient are then monitored and a confirmation message is generated automatically in response to a determination that confirmation is required for a selected activity or recipient. Each confirmation message is then correlated with the stored indications of electronic mail objects within the confirmation log. Thereafter, the sender may display the contents of the confirmation log selectively by mail object or recipient to determine the status of multiple selected electronic mail objects. A notification of the receipt of a confirmation message can also be arranged to be transmitted to the sender.

The present invention will be described further by way of example with reference to embodiments thereof as illustrated in the accompanying drawings, wherein:

Figure 1 is a logic flow chart illustrating a set of operations performed;

Figure 2 is a logic flow chart showing one manner of use of a confirmation log; and

Figure 3 is a pictorial presentation of a confirmation log.

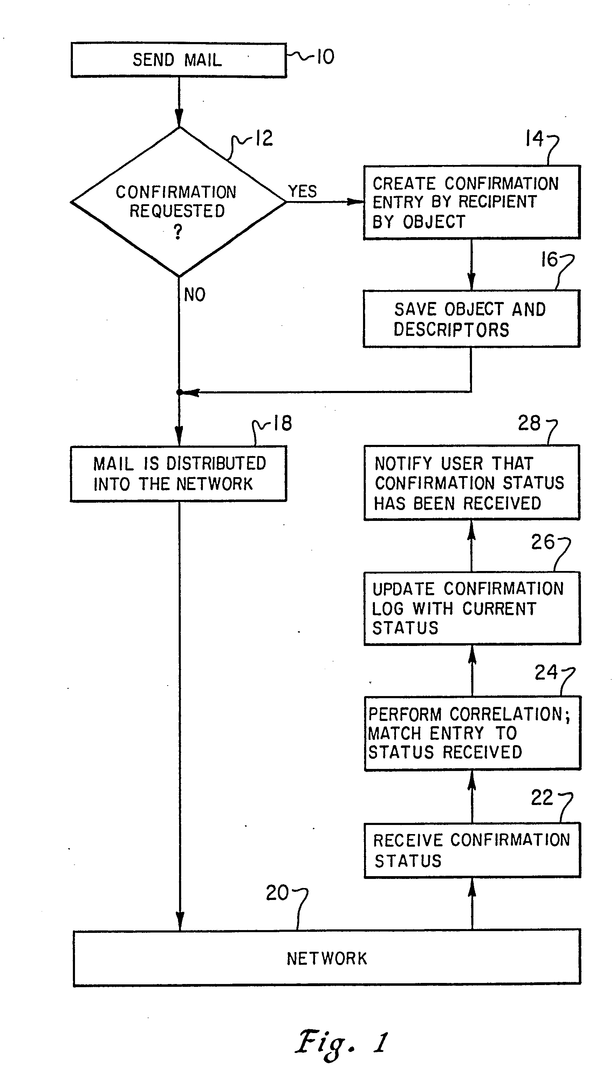

The logic flow chart of Figure 1 illustrates a set of operations which add-up to a process which begins at block 10 with the decision of a user to send an electronic mail object. Next, block 12 illustrates the determination of whether or not the sender has requested a confirmation for the particular electronic mail object being sent. If not, the mail is distributed into the network, as depicted by block 18 and coupled to network 20. Those skilled in the art will appreciate that network 20 may constitute a Local Area Network (LAN) coupled to a plurality of personal computers, or a plurality of interactive work stations which are each coupled via network 20 to a central processing unit.

In the event the sender has requested a confirmation for a particular electronic mail object, as determined by block 12, then block 14 illustrates the creation of a confirmation log entry by recipient or by mail object. Thereafter, as above, the mail is distributed into network 20, as depicted in block 18.

After an electronic mail object has been distributed via network 20, a confirmation message may be generated in response to either the receipt of that electronic mail object by a selected recipient or an activity of that recipient. In either case, the confirmation status message is transmitted via network 20 back to the sender where it is received, as illustrated in block 22. Next, the confirmation status message received is correlated with the plurality of confirmation entries which are present in the confirmation log and the confirmation status message is thereby matched to a particular electronic mail object.

After receiving a confirmation status message and correlating that message with one or more of the multiple confirmation entries contained within the confirmation log, the confirmation log status is then updated, as depicted in block 26. Finally, in accordance with the method of the present invention, the sender receives a notification that a confirmation status message has been received.

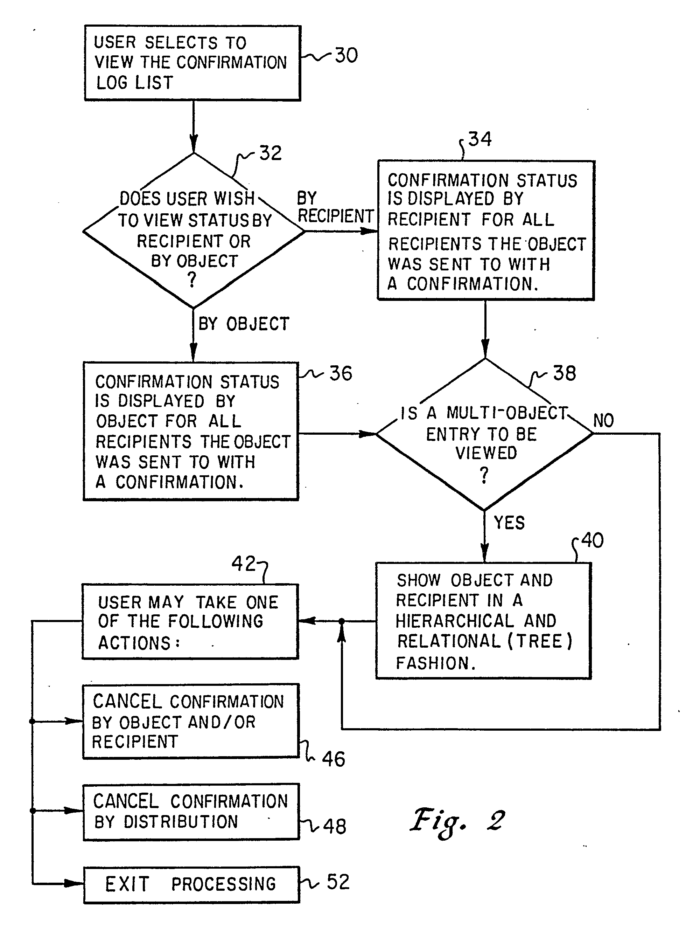

Referring now to Figure 2, there is depicted a logic flow chart illustrating the use of a confirmation log in accordance with the method of the present invention. As may be seen, the process begins at block 30 where a user selects the option of viewing the confirmation log list. Next, as determined by block 32, the user must indicate whether or not he or she wishes to view the confirmation log list status organised by recipient or by electronic mail object.

In the event the user wishes to view the status of each message by recipient, block 34 illustrates the displaying of the confirmation status by recipient for all recipients to whom the electronic mail object was sent with a confirmation requirement. In the event the user wishes to view the status of a particular electronic mail object by mail object, then block 36 depicts the displaying of the confirmation status by mail object for all recipients to whom the object was sent with a confirmation requirement.

Thereafter, block 38 is used to determine whether or not the particular electronic mail object to be viewed is a multiple component object. If not, the process proceeds to block 42. In the event the electronic mail object to be viewed is a multiple component object, then block 40 illustrates the displaying of the mail object and recipient data in a hierarchical and relational fashion. This particular display may be graphically implemented using a "tree" type display.

Thereafter, the user may take one of the following actions, as depicted in block 42. The user may also elect to cancel a confirmation requirement by mail object and/or by recipient, as illustrated in block 46. Similarly, the user may cancel a confirmation requirement by distribution, as depicted in block 48, or discontinue processing, as depicted in block 52.

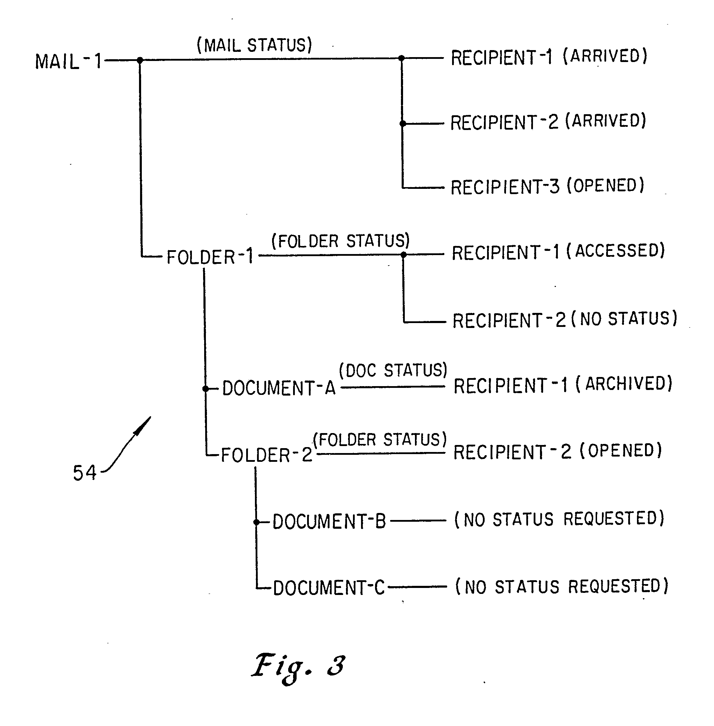

Finally, with reference to Figure 3, there is depicted a pictorial representation 54 of a confirmation log display, as implemented in accordance with the method of the present invention. As may be seen, the display provided in Figure 3 illustrates a particular mail object "MAIL-1" which includes "FOLDER-1" which includes "DOCUMENT-A" and "FOLDER-2," which was sent to three different recipients. As is illustrated, the hierarchical display provides the user with a simple and effective method of determining the status of each individual component of electronic mail organised by both electronic mail object and the recipients to whom the object was addressed.

The foregoing represents a method whereby the activities of multiple recipients of a plurality of electronic mail objects may be received and displayed by a user so that confirmation of those activities may be effectively organised. Allied material is disclosed and claimed in co-pending applications .......... (AT9-88-031 and AT9-88-032).

## Claims

1. A method for providing confirmation to a sender of the activities of a plurality of recipients of multiple electronic mail objects, the method comprising the steps of:
designating a plurality of electronic mail objects for which confirmation of selected activities of the recipients thereof is desired;
creating a confirmation log containing a stored indication of each of the designated electronic mail objects;
transmitting the plurality of electronic mail objects;
monitoring the activities of each recipient of the plurality of electronic mail objects; and
automatically transmitting a confirmation message to the confirmation log in response to a selected activity by a recipient of a designated electronic mail object.

2. A method as claimed in Claim 1, further including correlating each of the confirmation messages with the stored indication of each of the plurality of electronic mail objects within the confirmation log.

3. A method as claimed in either preceding Claim, further including the step of displaying the confirmation log to the sender.

4. A method as claimed in Claim 3, wherein the step of displaying the confirmation log to the sender further comprises the step of displaying a portion of the confirmation log relating to a selected electronic mail object.

5. A method as claimed in Claim 3, wherein the step of displaying the confirmation log to the sender further comprises the step of displaying a portion of the confirmation log relating to a selected recipient.

6. A method as claimed in any preceding Claim, further including the step of notifying the sender upon the receipt of a confirmation message.

Fig. 1

Fig. 2

MAIL-1 ——— (MAIL STATUS) ——— RECIPIENT-1 (ARRIVED)

——— RECIPIENT-2 (ARRIVED)

——— RECIPIENT-3 (OPENED)

FOLDER-1 ——— (FOLDER STATUS) ——— RECIPIENT-1 (ACCESSED)

——— RECIPIENT-2 (NO STATUS)

DOCUMENT-A ——— (DOC STATUS) ——— RECIPIENT-1 (ARCHIVED)

FOLDER-2 ——— (FOLDER STATUS) ——— RECIPIENT-2 (OPENED)

DOCUMENT-B ——— (NO STATUS REQUESTED)

DOCUMENT-C ——— (NO STATUS REQUESTED)

54

*Fig. 3*